# FASCICULE DE BREVET EUROPEEN

(11) **EP 1 609 699 B1**
(45) Date de publication et mention de la délivrance du brevet: **07.11.2007**
(21) Numéro de dépôt: 05291302.7
(22) Date de dépôt: 17.06.2005
(51) Int. Cl.: B62D 25/06

(54) **Panneau de toit de véhicule automobile et véhicule automobile muni d'un tel panneau de toit**
Dach für ein Fahrzeug und Fahrzeug mit einem solchen Dach
Car roof and car provided with such a roof

(30) Priorité: 18.06.2004 FR 0406664
(43) Date de publication de la demande: 28.12.2005
(73) Titulaire: COMPAGNIE PLASTIC OMNIUM, 69007 Lyon (FR)
(72) Inventeur: Bonneau, Eric, 38460 Saint Romain de Jalionas (FR); Delwal, Fabien, 01320 Chalamont (FR)
(74) Mandataire: Remy, Vincent Noel Paul

(56) Documents cités:
- DE-B- 1 169 793
- US-A- 3 446 528
- US-A- 3 825 297
- US-A- 3 891 266
- PATENT ABSTRACTS OF JAPAN vol. 2003, no. 01, 14 janvier 2003 (2003-01-14) & JP 2002 249074 A (KUBOTA CORP), 3 septembre 2002 (2002-09-03)

## Description

La présente invention concerne un panneau de toit de véhicule automobile.

On connaît déjà, dans l'état de la technique, un panneau de toit de véhicule automobile, comportant au moins une partie centrale en matériau transparent ou translucide, destinée à se trouver à la verticale de l'habitacle du véhicule automobile lorsque le panneau de toit est monté sur ledit véhicule automobile.

Un tel panneau est connu du document D1-US-A-3825297.

Un tel panneau de toit permet notamment d'augmenter la luminosité à l'intérieur du véhicule automobile.

Cependant, la partie centrale en matériau transparent ou translucide est généralement sujette à des rayures susceptibles de nuire à l'aspect général du panneau de toit. Ces rayures sont donc particulièrement indésirables pour l'utilisateur.

L'invention a notamment pour but de remédier à cet inconvénient en fournissant un panneau de toit de véhicule automobile pouvant subir des rayures sans que cela dégrade son aspect général.

A cet effet, l'invention a pour objet un panneau de toit de véhicule automobile, comportant au moins une partie centrale en matériau transparent ou translucide, destinée à se trouver à la verticale de l'habitacle du véhicule automobile lorsque le panneau de toit est monté sur ledit véhicule automobile, **caractérisé en ce que** ladite partie centrale en matériau transparent ou translucide est munie de bossages.

Les bossages réduisent l'apparence lisse de la partie en matériau transparent ou translucide, ce qui a pour effet d'atténuer la visibilité d'éventuelles rayures.

Par ailleurs, lorsqu'un objet est posé sur le panneau de toit, il ne prend appui que sur des sommets des bossages, préservant ainsi des rayures le reste du panneau de toit. Les rayures éventuelles se forment donc généralement à ces sommets, là où elles sont le moins visibles, notamment de l'intérieur du véhicule.

Un panneau de toit selon l'invention peut en outre comporter l'une ou plusieurs des caractéristiques suivantes :
- les bossages sont répartis de manière régulière sur toute la longueur ou toute la largeur de la partie en matériau transparent ou translucide ;
- les bossages sont identiques entre eux ;
- les bossages sont des nervures de rigidification ;
- la partie en matériau transparent ou translucide s'étend sur tout le panneau ;
- le matériau transparent ou translucide est une matière plastique ;
- le panneau de toit est amovible.

L'invention à également pour objet un véhicule automobile **caractérisé en ce qu'il** comporte un panneau de toit selon l'invention.

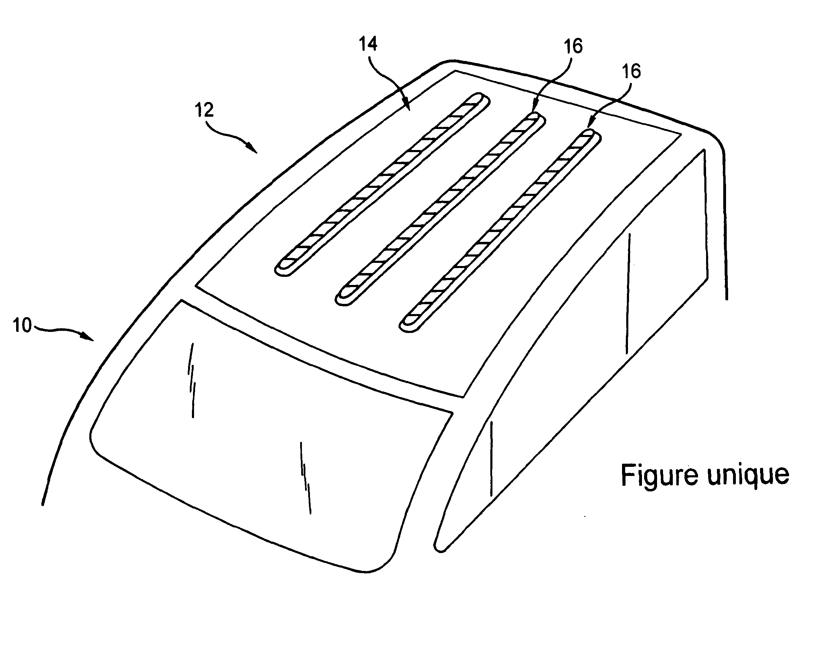

L'invention sera mieux comprise à la lecture de la description qui va suivre, donnée uniquement à titre d'exemple et faite en se référant à la figure unique, qui est une vue en perspective d'un panneau de toit selon un mode de réalisation de l'invention.

On a représenté sur la figure unique un véhicule automobile, désigné par la référence générale 10.

Le véhicule automobile est muni d'un panneau de toit 12, amovible ou non, comportant une partie centrale 14 en matériau transparent ou translucide, par exemple du verre ou une matière plastique. Cette partie centrale 14 est destinée à se trouver à la verticale de l'habitacle du véhicule automobile 10 lorsque le panneau de toit 12 est monté sur ledit véhicule automobile 10.

Dans l'exemple représenté, la partie centrale 14 en matériau transparent ou translucide s'étend sur tout le panneau 12, mais en variante, cette partie centrale 14 pourrait être plus restreinte. Selon une autre variante, le panneau 12 pourrait comporter plusieurs parties en matériau transparent ou translucide.

Afin de réduire une apparence lisse de la partie centrale 14, cette partie centrale 14 est munie de bossages 16, destinés à atténuer la visibilité d'éventuelles rayures sur la partie centrale 14. Dans le mode de réalisation décrit, les bossages 16 sont tous identiques entre eux.

Dans l'exemple représenté, les bossages 16 sont répartis de manière régulière sur toute la longueur de la partie centrale 14, mais en variante, les bossages 16 pourront être répartis sur la largeur de cette partie 14.

On notera que les bossages 16 peuvent être des nervures de rigidification, afin de participer à la résistance du panneau 14.

Il est bien entendu que le mode de réalisation qui vient d'être décrit ne présente aucun caractère limitatif et qu'il pourra recevoir toute modification désirable sans sortir pour cela du cadre de l'invention.

## Revendications

1. Panneau de toit (12) de véhicule automobile (10), comportant au moins une partie centrale (14) en matériau transparent ou translucide, destinée à se trouver à la verticale de l'habitacle du véhicule automobile (10) lorsque le panneau de toit (12) est monté sur ledit véhicule automobile (10), **caractérisé en ce que** ladite partie centrale (14) en matériau transparent ou translucide est munie de bossages (16).

2. Panneau de toit (12) selon la revendication 1, dans lequel les bossages (16) sont répartis de manière régulière sur toute la longueur ou toute la largeur de la partie centrale (14) en matériau transparent ou translucide.

3. Panneau de toit (12) selon la revendication 1 ou 2, dans lequel les bossages (16) sont identiques entre eux.

4. Panneau de toit (12) selon l'une quelconque des revendications 1 à 3, dans lequel les bossages (16) sont des nervures de rigidification.

5. Panneau de toit (12) selon l'une quelconque des revendications 1 à 4, dans lequel la partie centrale (14) en matériau transparent ou translucide s'étend sur tout le panneau (12).

6. Panneau de toit (12) selon l'une quelconque des revendications 1 à 5, dans lequel le matériau transparent ou translucide est une matière plastique.

7. Panneau de toit (12) de véhicule automobile selon l'une quelconque des revendications 1 à 6, qui est amovible.

8. Véhicule automobile (10) **caractérisé en ce qu**'il comporte un panneau de toit (12) selon l'une quelconque des revendications 1 à 7.

## Claims

1. A roof panel (12) for a motor vehicle (10), the panel including at least a central portion (14) of material that is transparent or translucent, and that is designed to be placed vertically over the cabin of the motor vehicle (10) when the roof panel (12) is mounted on said motor vehicle (10), the panel being **characterized in that** said central portion (14) of transparent or translucent material is provided with bosses (16).

2. A roof panel (12) according to claim 1, in which the bosses (16) are regularly distributed over the entire length or the entire width of the central portion (14) of transparent or translucent material.

3. A roof panel (12) according to claim 1 or claim 2, in which the bosses (16) are identical to one another.

4. A roof panel (12) according to any one of claims 1 to 3, in which the bosses (16) are stiffening ribs.

5. A roof panel (12) according to any one of claims 1 to 4, in which the central portion (14) of transparent or translucent material extends over the entire panel (12).

6. A roof panel (12) according to any one of claims 1 to 5, in which the transparent or translucent material is a plastics material.

7. A motor vehicle roof panel (12) according to any one of claims 1 to 6, which panel is removable.

8. A motor vehicle (10), **characterized in that** it includes a roof panel (12) according to any one of claims 1 to 7.

## Patentansprüche

1. Dachplatte (12) eines Kraftfahrzeugs (10), die mindestens einen zentralem Bereich (14) aus einem transparenten oder durchscheinenden Material aufweist, wobei der zentrale Bereich so vorgesehen ist, dass er sich vertikal in der Fahrgastzelle des Kraftfahrzeugs (10) befindet, wenn die Dachplatte (12) auf dem Kraftfahrzeug montiert wird, **dadurch gekennzeichnet, dass** der zentrale Bereich (14) aus transparentem oder durchscheinendem Material mit Erhebungen (16) versehen ist.

2. Dachplatte (12) nach Anspruch 1, in der die Erhebungen (16) regelmäßig über die gesamte Länge oder die gesamte Breite des zentralen Bereiches (14) aus transparentem oder durchscheinendem Material verteilt sind.

3. Dachplatte (12) nach Anspruch 1 oder Anspruch 2, in der die Erhebungen (16) einander völlig ähnlich sind.

4. Dachplatte (12) nach einem der Ansprüche 1 bis 3, in der es sich bei den Erhebungen (16) um Verstärkungsrippen handelt.

5. Dachplatte (12) nach einem der Ansprüche 1 bis 4, in der der zentrale Bereich (14) aus transparentem oder durchscheinendem Material sich über die gesamte Platte (12) erstreckt.

6. Dachplatte (12) nach einem der Ansprüche 1 bis 5, in der das transparente oder durchscheinende Maetrial ein Kunststoffmaterial ist.

7. Dachplatte (12) eines Kraftfahrzeugs nach einem der Ansprüche 1 bis 6, die abnehmbar ist.

8. Kraftfahrzeug (10), **dadurch gekennzeichnet, dass** es eine Dachplatte (12) nach einem der Ansprüche 1 bis 7 aufweist.
